**Europäisches Patentamt**

**European Patent Office**

**Office européen des brevets**

(19)

(11) Veröffentlichungsnummer : **0 151 295**
**B1**

(12) **EUROPÄISCHE PATENTSCHRIFT**

(45) Veröffentlichungstag der Patentschrift :
**30.11.88**

(51) Int. Cl.⁴ : **C 01 B 33/187**

(21) Anmeldenummer : **84115779.5**

(22) Anmeldetag : **19.12.84**

(54) Verfahren zur Herstellung von kristallinen Alkalischichtsilikaten.

(30) Priorität : **04.01.84 DE 3400132**

(43) Veröffentlichungstag der Anmeldung :
**14.08.85 Patentblatt 85/33**

(45) Bekanntmachung des Hinweises auf die Patenterteilung : **30.11.88 Patentblatt 88/48**

(84) Benannte Vertragsstaaten :
**AT BE CH DE FR GB IT LI NL SE**

(56) Entgegenhaltungen :
**EP-A- 0 042 225**
**DD-A-    63 366**
**FR-A- 2 272 033**

(73) Patentinhaber : **HOECHST AKTIENGESELLSCHAFT**
**Postfach 80 03 20**
**D-6230 Frankfurt am Main 80 (DE)**

(72) Erfinder : **Dr. Rieck, Hans-Peter**
**Staufenstrasse 13a**
**D-6238 Hofheim am Taunus (DE)**

EP 0 151 295 B1

## Beschreibung

Die Erfindung betrifft ein Verfahren zur Herstellung von kristallinen Alkalisilikaten mit Schichtstruktur in wäßrigem Medium.

Neben wasserlöslichen Alkalisilikaten (mit einem niedrigen Verhältnis $SiO_2$/Alkalioxid) und schwer löslichen amorphen Alkalisilikaten sind auch kristalline Alkalisilikate bekannt. Bei diesen kann man zwischen Silikaten mit Gerüststruktur (z. B. Zeolithen, die frei von Aluminium oder zumindest arm an Aluminium sind) und Silikaten mit Schichtstruktur unterscheiden.

Kristalline Alkalisilikate mit Schichtstruktur sind teils in der Natur gefunden, teils synthetisch hergestellt worden. Die Synthese der Alkalisilikate mit Schichtstruktur, insbesondere der Natrium- und der Kaliumsalze, erfolgt üblicherweise aus Kieselgel, Kieselsol oder gefällter Kieselsäure unter Zusatz von Alkalihydroxid im wäßrigen System. Gelegentlich wird auch anstelle einer Alkalihydroxidlösung eine entsprechende Carbonatlösung verwendet. Die Menge an zuzugebendem Alkali richtet sich dabei nach dem gewünschten Produkt.

Gegenstand der vorliegenden Erfindung ist ein Verfahren zur Herstellung eines kristallinen Alkalischichtsilikates in wäßrigem Medium, das dadurch gekennzeichnet ist, daß man ein in Wasser gelöstes oder ein amorphes Alkalisilikat mit einem molaren Verhältnis $M_2O/SiO_2$, wobei M für ein Alkalimetall steht, von 0,24 bis 2,0, mit so viel einer sauren Verbindung versetzt, daß ein molares Verhältnis $M_2O$ (nicht neutralisiert)/$SiO_2$ von 0,05 bis 0,239 erreicht wird, man gegebenenfalls durch Verdünnen ein molares Verhältnis $SiO_2/H_2O$ von 1 : 5 bis 1 : 100 einstellt und man die Reaktionsmischung so lange bei einer Reaktionstemperatur von 70 bis 250 °C hält, bis das Alkalischichtsilikat auskristallisiert ist. Vorzugsweise steht M für Natrium und Kalium. Ein bevorzugtes Molverhältnis $Na_2O$ (nicht neutralisiert)/$SiO_2$ beträgt 1 : 5 bis 1 : 7,5. Eine bevorzugte, sehr reaktive Ausgangsverbindung, die als großtechnisches Produkt gut zugänglich und kostengünstig ist, stellt Natronwasserglas mit einem $SiO_2$-Gehalt von ca. 22 bis 37 % und einem $Na_2O$-Gehalt von 5 bis 18 % sowie einem $Al_2O_3$-Gehalt von unter 0,5 % dar. Dabei handelt es sich um ein im Wasser gelöstes Alkalisilikat. Besonders bevorzugt ist ein Natronwasserglas mit 22-30 Gew.-% $SiO_2$ und 5-9 Gew.-% $Na_2O$. Aber auch amorphe Alkalisilikate, insbesondere feste Natrium- und Kaliumsilikate, die auch wasserfrei sein können, die jedoch in Wasser, zumindest bei der Reaktionstemperatur, löslich sind, können verwendet werden.

Die zugesetzte saure Verbindung kann ein Säureanhydrid oder ein saures Salz wie Natriumhydrogensulfat sein. Bevorzugt werden jedoch freie organische oder anorganische Säuren. Besonders bevorzugt werden anorganische Säuren, wie Phosphorsäure oder Schwefelsäure.

Die Menge an zuzugebender saurer Verbindung richtet sich nach dem Ausgangssilikat und dem gewünschten Endprodukt. Fast immer weist das gebildete Endprodukt ein geringeres $M_2O/SiO_2$-Verhältnis auf als das Reaktionsgemisch, aus dem es sich bildet. In den Endprodukten liegt das Atomverhältnis Alkalimetall/Silicium etwa zwischen 1 : 4 und 1 : 11. Der pH-Wert der Produktmischung nach Zugabe der sauren Verbindung liegt im allgemeinen über 9. Vorzugsweise wird ein pH-Wert zwischen 10 und 12 eingestellt. Durch den Zusatz der sauren Verbindung wird das Reaktionssystem abgepuffert.

Nach dem erfindungsgemäßen Verfahren lassen sich reine Produkte oder Gemische kristalliner Alkalischichtsilikate erhalten. Zeolithe als Verunreinigungen bilden sich nur, wenn größere Mengen Aluminium in der Reaktionsmischung vorhanden sind. Amorphe Kieselsäure ist nur bei sehr kurzen Reaktionszeiten, Quarz nur bei sehr langen Reaktionszeiten zu beobachten.

Die erhaltenen Alkalischichtsilikate zeigen Ionenaustauschvermögen. Ihre Röntgenbeugungsdiagramme sind ähnlich denen bekannter Alkalischichtsilikate.

Neben den Alkalimetallionen können zusätzlich auch andere Metallionen bei der Synthese anwesend sein, beispielsweise Germanium, Aluminium, Indium, Arsen und Antimon sowie die Nichtmetalle Bor und Phosphor. Sofern die Menge dieser Bestandteile, bezogen auf den Alkaligehalt, kleiner als 10 % ist, wird die Synthese nur unwesentlich beeinflußt. Zur Herstellung eines reinen Alkalischichtsilikates, bzw. der freien Säure, ist es vorteilhaft, auf die Zugabe von Fremdmetallen bei der Synthese zu verzichten. Reine Schichtsilikate mit einem anderen Kation als Alkali lassen sich leicht in einem weiteren Schritt aus dem Alkalisalz durch Ionenaustausch bzw. aus der entsprechenden freien Säure durch Neutralisation gewinnen.

Wie erwähnt, können größere Anteile an Aluminium im Ausgangsgemisch zur Bildung von zeolithischen Nebenprodukten, meist vom ZSM-5-Typ oder vom Mordenit-Typ, führen. Ein geringer Aluminiumgehalt, wie er beispielsweise in technischem Wasserglas vorhanden ist, stört dagegen nicht.

Das erfindungsgemäße Verfahren kann auch in Gegenwart geringer Mengen an organischen Verbindungen durchgeführt werden ; vorzugsweise wird jedoch ohne jegliche organische Verbindungen, insbesondere ohne nicht-saure Verbindungen, gearbeitet.

Gemäß DE-Offenlegungsschrift 30 48 819 wird bei der ZSM-5-Synthese in Gegenwart von Ethylendiamin das Mineral Magadiit, $Na_2Si_{14}O_{29} \cdot XH_2O$, gebildet. In der europäischen Patentanmeldung 42 225 wird beschrieben, daß bei der Herstellung eines Zeoliths vom ZSM-5-Typ in Gegenwart von Alkoholen das Produkt durch eine Verbindung verunreinigt ist, die dem Mineral Kenyait $Na_2Si_{22}O_{45} \cdot XH_2O$ ähnelt. Bei diesem bekannten Verfahren fällt das gebildete Schichtsilikat jedoch nur in geringer Menge und als unerwünschtes Nebenprodukt an.

Für das erfindungsgemäße Verfahren wird ein Molverhältnis der Einsatzprodukte von $H_2O/SiO_2$ von 8 : 1 bis 40 : 1 bevorzugt. Für die Herstellung alkaliarmer Schichtsilikate (Atomverhältnis M/Si von 1 : 7 bis 1 : 11) ist dabei häufig eine größere Verdünnung mit Wasser vorteilhaft als für die Herstellung der alkalireicheren Schichtsilikate (Atomverhältnis M/Si etwa 1 : 4 bis 1 : 7). Die Reaktionstemperatur beträgt vorzugsweise 130-230 °C, insbesondere 160-210 °C. Längere Reaktionszeiten, hohe Reaktionstemperaturen und niedrige Verhältnisse von Alkali (nicht neutralisiert)/$SiO_2$ begünstigen die Bildung alkaliarmer Schichtsilikate. Kurze Reaktionszeiten, niedrige Reaktionstemperaturen und hohe Alkali/Si-Verhältnisse begünstigen die Bildung alkalireicher Schichtsilikate.

Die Reaktionsdauer hängt stark von der Reaktionstemperatur ab. Sie kann weniger als 1 Stunde, aber auch mehrere Monate betragen. Die optimale Reaktionsdauer kann für die gewählte Reaktionstemperatur ermittelt werden, indem während der Umsetzung zu verschiedenen Zeitpunkten Proben entnommen werden, die röntgenographisch untersucht werden.

Die Umsetzung wird vorzugsweise in einem Druckgefäß unter gutem Rühren durchgeführt. Die Zugabe von Impfkristallen ist sehr vorteilhaft, da die Reinheit des Produkts verbessert und die Reaktionszeit verkürzt wird. Jedoch kann auch ohne Impfkristalle gearbeitet werden.

Die Menge an Impfkristallen kann bei diskontinuierlicher Reaktionsführung bis zu 30 Gew.-%, bezogen auf den $SiO_2$-Anteil des zugesetzten Alkalisilikats, d. h. des in Wasser gelösten oder amorphen Alkalisilikats betragen. Impfkristallzusätze unter 0,01 Gew.-% haben keinen erkennbaren Effekt mehr. Anstatt Impfkristalle zuzusetzen, kann es auch ausreichend sein, wenn geringe Reste von einem früheren Ansatz im Reaktionsgefäß verbleiben. Bei kontinuierlicher Reaktionsführung haben sich auch wesentlich höhere Konzentrationen an Kristallkeimen (im stationären Gleichgewicht) als vorteilhaft erwiesen.

Das erfindungsgemäße Verfahren kann diskontinuierlich, halbkontinuierlich und kontinuierlich in Apparaten mit Strömungsrohr-, Rührkessel- oder Kaskadencharakteristik durchgeführt werden.

Im folgenden soll die halb- bzw. vollkontinuierliche Herstellung eines kristallinen Alkalischichtsilikates in einem Rührkessel, bzw. einer Rührkesselkaskade, näher erläutert werden. Meist wird bei der kontinuierlichen Ausgestaltung des erfindungsgemäßen Verfahrens bei Temperaturen oberhalb 100 °C gearbeitet. Wegen des Druckes, der sich über der wäßrigen Reaktionsmischung einstellt, ist dann ein Autoklav erforderlich. Eine zusätzliche Erhöhung des Druckes durch Zugabe eines Inertgases bringt keine Vorteile. Auch während der Zugabe der Reaktionskomponenten soll die Temperatur der Reaktionsmischung im Bereich von 70 bis 250, insbesondere 130 bis 230 °C liegen. Dies ist besonders leicht möglich, wenn die zugegebenen Substanzen bereits aufgeheizt sind. Der Druck im Reaktionsgefäß soll unter 100 bar liegen, im allgemeinen im Bereich von 1 bis 25 bar.

Sofern der Druck im Rührkessel oberhalb von 1 bar liegt, ist für das Eindosieren der Reaktionskomponenten eine Pumpe notwendig. Es kann hierfür eine einzige Pumpe ausreichend sein ; es ist jedoch auch möglich, einzelne Komponenten getrennt zuzugeben, so daß 2 oder auch 3 Pumpen an verschiedenen Zulaufstellen des Autoklaven erforderlich werden. Es ist bevorzugt, die saure Verbindung (z. B. Schwefelsäure, Phosphorsäure) und die basischen Reaktionskomponenten (in Wasser lösliche Alkalisilikate) getrennt einzudosieren, um eine Gelbildung außerhalb des Reaktionsgefäßes zu vermeiden. Im Fall einer Überdosierung der sauren Verbindung kann auch eine Zugabe von Alkalilauge erforderlich werden.

Die Ausgangsprodukte können nacheinander zugegeben werden ; Bevorzugt wird jedoch eine gleichzeitige Zugabe. Falls mehrere hintereinander geschaltete Reaktionskessel eingesetzt werden, so ist es vorteilhaft, wenn die Zugabedauer für jede Komponente 10 bis 100 %, insbesondere 20 bis 80 %, der Verweilzeit im ersten Rührkessel beträgt.

Wenn während der Zugabe nicht gleichzeitig Produkt abgeführt wird, steigt der Inhalt im Rührgefäß an. Die Zugabe muß dann spätestens beendet werden, wenn der maximale Füllstand erreicht ist. Wenn die Komponenten sehr rasch zugegeben werden, muß im Reaktionsgefäß noch weiter gerührt werden, um eine ausreichende Bildung des kristallinen Silikats durch Nachkristallisation zu erreichen. Anschließend wird das Produkt aus dem noch heißen Autoklaven entfernt. Es kann jedoch vorteilhaft sein, diese Nachkristallisation in einem weiteren Gefäß oder in weiteren Gefäßen, die gegebenenfalls ebenfalls mit Rührer versehen sind, durchzuführen, so daß sich eine (Rührkessel)-Kaskade ausbildet. Die Dauer der Nachkristallisation soll maximal der 99-fachen, vorzugsweise maximal der 20-fachen und insbesondere (bei hohen Temperaturen oberhalb 200 °C) nur der 9-fachen, vorzugsweise weniger als der 4-fachen mittleren Verweilzeit im ersten Rührkessel entsprechen. Dabei ist es möglich, die Nachkristallisation bei Temperaturen durchzuführen, die deutlich niedriger sind als im ersten Rührkessel.

Es ist für die kontinuierliche Reaktionsführung vorteilhaft, den Autoklaven nicht vollständig zu entleeren, sondern stets mindestens teilweise mit Produktmischung gefüllt zu halten, die aus dem auskristallisierten Silikat, der Mutterlauge sowie nicht umgesetzten Ausgangsprodukten besteht. Damit verbleibt ein hoher Anteil an Silikat-Kristallen im Autoklaven, der die weitere Bildung von kristallinem Silikat fördert.

Bei kontinuierlicher Reaktionsführung werden Impfkristalle nur während der Anfahrperiode (zum Einstellen des Gleichgewichts) zugesetzt. Während der Reaktion soll das Gewichtsverhältnis von Alkalisilikat-Kristallen zu gelöstem $SiO_2$ in der Reaktionsmischung über 0,05, vorzugsweise über 0,1 und insbesondere über 0,2 liegen. Bei vollkontinuierlicher Reaktionsführung werden dabei konstante Werte erhalten, die im allgemeinen über 1,0 liegen. Bei teilkontinuierlicher Reaktionsführung wird ein Mittelwert periodisch über- und unterschritten.

Bei vollkontinuierlicher Reaktionsführung und idealer Durchmischung ist es möglich, daß im Rührkessel, wie auch im ausgetragenen Produkt, wesentlich mehr kristallines als gelöstes Silikat vorhanden ist.

Soll das Produkt aus dem noch unter Druck befindlichen Autoklaven entleert werden, so kann dies mit einem entsprechenden Bodenablaßventil erreicht werden. Wenn keine vollständige Entleerung gewünscht wird, so wird das Produkt vorteilhafterweise über ein Steigrohr entleert, das in die Reaktionsmischung eintaucht und mit einem Ventil verschlossen wird. Durch die Länge des Steigrohres wird festgelegt, wieviel Produkt maximal entfernt werden kann.

Vorteilhafterweise wird das erfindungsgemäße Verfahren vollkontinuierlich betrieben. Neben der kontinuierlichen Zuführung der Ausgangskomponenten ist hierfür ein kontinuierlicher Austrag der Reaktionsprodukte erforderlich. Dies kann beispielsweise mit einem Steigrohr geschehen. Zur Überwachung des Reaktionsgefäßes kann es erforderlich sein, den Füllstand durch eine Füllstandsanzeige oder durch eine Gewichtsmessung des Apparates zu kontrollieren.

Die Reaktionszeit wird sowohl im Chargenbetrieb wie bei kontinuierlicher Führung im allgemeinen aus wirtschaftlichen Gründen so bemessen, daß mindestens 10 %, im allgemeinen mindestens jedoch mehr als 70 %, des zugegebenen Alkalisilikats in Alkalischichtsilikat umgewandelt werden. Bei höheren Reaktionstemperaturen sind geringe Reaktionszeiten erforderlich. Bei Temperaturen oberhalb 180 °C reichen mitunter Zeiten von weniger als 1 Stunde aus. Es können jedoch auch Reaktionszeiten von mehreren Tagen erforderlich werden. Man kann die von den jeweiligen Reaktionsbedingungen abhängigen erforderlichen Reaktionszeiten durch Röntgenbeugungsdiagramme einzelner Proben ermitteln. Nach dem erfindungsgemäßen Verfahren lassen sich Silikate herstellen, die ausschließlich die für kristalline Schichtsilikate typischen Röntgenreflexe zeigen.

Das Verhältnis von (gebildetem) kristallinem zu (zugegebenem) gelösten Silikat wird in der Hauptsache durch die mittlere Verweilzeit sowie die Zusammensetzung (insbesondere das Molverhältnis $M_2O/SiO_2$) bestimmt. Eine Erhöhung der mittleren Verweilzeit erhöht den kristallinen Anteil, begünstigt mitunter jedoch auch die Bildung von Nebenprodukten. Aus wirtschaftlichen Gründen kann es sinnvoll sein, bei kürzeren Verweilzeiten sich mit einem geringeren Anteil an kristallinem Produkt zufrieden zu geben.

Für die Isolierung des Schichtsilikats wird die Reaktionsmischung nach der Umsetzung filtriert, mit Wasser oder verdünnter Alkalilauge (entsprechend dem Alkalisilikat) gewaschen und gegebenenfalls getrocknet. Es kann aber auch für manche weitere Verarbeitung vorteilhaft sein, das filterfeuchte Produkt direkt weiterzuverarbeiten, beispielsweise durch Behandlung mit Salzlösungen die Alkaliionen durch andere Kationen auszutauschen.

Die nach dem erfindungsgemäßen Verfahren hergestellten Alkalisilikate und die daraus erhältlichen freien Schichtkieselsäuren können als Adsorptionsmittel analog den Silikaten der DE-Patentschrift 2 742 912 verwendet werden.

Es ist überraschend, daß bei der Umsetzung von Alkalisilikatlösungen, insbesondere Wasserglaslösungen, mit sauren Verbindungen, wie z. B. Schwefelsäure, nicht amorphe Kieselsäure, sondern kristalline Silikate mit Schichtstruktur erhalten werden können. Im Vergleich zu den bekannten Verfahren zur Herstellung von Alkalischichtsilikaten bietet das erfindungsgemäße Verfahren den Vorteil einer vergleichsweise kürzeren Reaktionszeit, der auf die hohe Reaktivität der eingesetzten, in Wasser löslichen oder amorphen Alkalisilikate zurückgeht.

### Beispiel 1

Man stellt zunächst eine Reaktionsmischung der molaren Zusammensetzung

0,303 $Na_2O$ : 0,0052 $Al_2O_3$ : $SiO_2$ : 30 $H_2O$

dadurch her, daß man 83,5 Gewichtsteile Natronwasserglas (27 % $SiO_2$, 8,43 % $Na_2O$, 0,24 % $Al_2O_3$) zu 149 Teilen Wasser gibt. Danach wird ein Teil eines filterfeuchten kristallinen Natriumsilikats aus einem früheren Versuch (71 % Gewichtsverlust durch Erhitzen auf 1 200 °C , für die Berechnung der molaren Zusammensetzung wurde nur der Wasseranteil berücksichtigt) zugegeben. Man setzt anschließend langsam unter Rühren 4,93 Teile 96 %ige Schwefelsäure zu. Danach hat die Reaktionsmischung folgende molare Zusammensetzung :

0,174 $Na_2O$ : 0,0052 $Al_2O_3$ : $SiO_2$ : 0,129 $Na_2SO_4$ : 30 $H_2O$.

Die Reaktionsmischung wird in einem Edelstahl-Autoklaven innerhalb von 1,5 Stunden auf 205 °C erhitzt, 2,5 Stunden bei dieser Temperatur gehalten und anschließend langsam abgekühlt. Nach dem Abkühlen wird die Reaktionsmischung filtriert, mit Wasser gewaschen und auf einer Nutsche trocken gesaugt. Das filterfeuchte Produkt weist einen Glühverlust von 55 % auf. Das an der Luft kurzzeitig getrocknete Produkt wird thermogravimetrisch untersucht. Bis zu einer Temperatur von etwa 140 °C ist ein Gewichtsverlust von 43 % eingetreten. Bis ca. 1 000 °C wird keine weitere wesentliche Gewichtsabnahme beobachtet. Das bei 120 °C bis zur Gewichtskonstanz getrocknete Produkt, Na-SKS-1, zeigt folgende elementar-analytische Zusammensetzung : 3,8 % Na, 0,24 % Al, 41,5 % Si und 0,003 % Fe. Es läßt sich daraus ein molares $SiO_2/Na_2O$-Verhältnis von 17,9 errechnen. Das molare $SiO_2/Al_2O_3$-Verhältnis

von 332 zeigt, daß trotz der Anwesenheit von gelöstem $Al_2O_3$ in der Reaktionsmischung dieses nur in sehr geringen Mengen in das Endprodukt eingebaut wird. Das Röntgenbeugungsdiagramm des an der Luft getrockneten Natriumsilikats (Na-SKS-1) ist in Tabelle 1 aufgeführt.

### Tabelle 1

| d $(10^{-8}$ cm$)$ | I/Io |
|---|---|
| 20,5 | 56 |
| 10,0 | 11 |
| 7,31 | 4 |
| 4,99 | 13 |
| 3,64 | 22 |
| 3,52 | 31 |
| 3,44 | 100 |
| 3,34 | 46 |
| 3,21 | 53 |
| 2,94 | 16 |

### Beispiel 2

Das kristalline Na-Silikat aus Beispiel 1 wird zweimal mit 5 %iger Salzsäure bei 80 °C 15 Minuten lang extrahiert. Das Röntgenbeugungsdiagramm des filterfeuchten Produktes zeigt Tabelle 3. Die Untersuchung der differentiellen Thermoanalyse ergibt eine ausgeprägte endotherme Umwandlung bei etwa 120 °C und eine weit weniger ausgeprägte endotherme Umwandlung bei etwa 1 180 °C.

### Tabelle 2

| d $(10^{-8}$ cm$)$ | I/Io |
|---|---|
| 16,1 | 19 |
| 7,89 | 5 |
| 5,21 | 12 |
| 3,85 | 15 |
| 3,53 (S) | 27 |
| 3,39 | 100 |
| 3,22 (S) | 17 |

S = Schulter

### Beispiel 3

Produkt aus Beispiel 2 wird mit einem Überschuß an Natronlauge versetzt. Das Röntgenbeugungsdiagramm des bei 120 °C getrockneten Produkts ist in Tabelle 4 aufgeführt.

(Siehe Tabelle 3 Seite 6 f.)

Tabelle 3

| d $(10^{-8}$ cm) | I/Io |
|---|---|
| 19,8 | 62 |
| 9,87 | 13 |
| 7,31 | 5 |
| 6,37 | 3 |
| 4,98 | 11 |
| 4,69 | 10 |
| 4,27 | 9 |
| 3,66 | 19 |
| 3,50 | 31 |
| 3,44 | 100 |
| 3,35 | 44 |
| 3,33 | 44 |
| 3,21 | 47 |
| 2,94 | 8 |

Beispiel 4

10 g des Produktes aus Beispiel 1, das zuvor kurzzeitig an der Luft getrocknet worden war und einen Glühverlust von 44,2 % hat, werden zu 190 g Wasser gegeben und mit 0,5 molarer $H_2SO_4$ titriert. Nach jeder Zugabe wird so lange gewartet, bis der pH-Wert in der zweiten Stelle hinter dem Komma konstant ist. Die Dauer einer Titration beträgt dadurch mehrere Stunden. Tabelle 4 zeigt die Titrationswerte. Bei der graphischen Darstellung wird aus dem Wendepunkt der Kurve bei pH 4,5 ein Äquivalenzwert von 150 mmol $Na^+$/100 g geglühtes Produkt ermittelt. Es wird ein Ionenaustauschvermögen von etwa 95 mmol $Na^+$/mol $SiO_2$, entsprechend einem $SiO_2 : Na_2O$-Verhältnis bzw. einem $SiO_2/2H^+$-Verhältnis von 21 : 1 bestimmt. In Tabelle 5 wird das Röntgenbeugungsdiagramm nach der Titration und Trocknung an der Luft aufgeführt.

Tabelle 4

| ml 0,5 m $H_2SO_4$ | pH | mmol (ausgetauschte) $Na^+$-Ionen/ 100 g geglühtes Produkt |
|---|---|---|
| 0,00 | 10,22 | 0,0 |
| 1,00 | 9,25 | 17,9 |
| 2,00 | 8,32 | 35,8 |
| 3,00 | 7,52 | 53,8 |
| 4,00 | 7,09 | 71,7 |
| 5,00 | 6,85 | 89,6 |
| 5,50 | 6,73 | 98,6 |
| 6,00 | 6,66 | 107,5 |
| 6,50 | 6,49 | 116,5 |
| 7,00 | 6,36 | 125,5 |
| 7,50 | 6,06 | 134,4 |
| 8,00 | 5,44 | 143,4 |

## 0 151 295

Tabelle 4   (Fortsetzung)

| ml 0,5 m $H_2SO_4$ | pH | mmol (ausgetauschte) $Na^+$-Ionen/ 100 g geglühtes Produkt |
|---|---|---|
| 8,25 | 4,92 | 147,9 |
| 8,50 | 3,58 | 152,4 |
| 8,75 | 3,18 | 156,8 |
| 9,00 | 2,92 | 161,3 |
| 9,25 | 2,79 | 165,8 |
| 9,50 | 2,65 | 170,3 |
| 9,75 | 2,59 | 174,8 |
| 10,00 | 2,52 | 179,2 |
| 10,25 | 2,44 | 183,7 |
| 10,50 | 2,39 | 188,2 |
| 10,75 | 2,34 | 192,7 |
| 11,00 | 2,30 | 197,2 |
| 11,50 | 2,22 | 206,1 |
| 12,00 | 2,16 | 215,1 |

Tabelle 5

Röntgenbeugungsdiagramm von H-SKS-1 (Beispiel 4)

| $d\ (10^{-8}$ cm$)$ | $I/Io$ |
|---|---|
| 18,0 | 33 |
| 8,93 | 9 |
| 7,40 | 7 |
| 4,42 | 7 |
| 3,86 | 15 |
| 3,69 | 20 |
| 3,57 | 25 |
| 3,41 | 100 |
| 3,21 | 20 |

Beispiel 5

Die Titration von Beispiel 4 wird wiederholt, jedoch wird anstelle des Wassers 190 g 5 %ige NaCl-Lösung verwendet. Tabelle 6 zeigt die Titrationswerte. Bei der graphischen Darstellung wird aus dem Wendepunkt der Kurve bei pH 3,75 ein Äquivalenzwert von 145 mmol/100 g geglühtes Produkt ermittelt. Daraus wird ein Ionenaustauschvermögen von etwa 91 mmol $Na^+$/mol $SiO_2$, entsprechend einem $SiO_2$ : $Na_2O$-Verhältnis bzw. einem $SiO_2$/$2H^+$-Verhältnis von 44 : 1 bestimmt.

(Siehe Tabelle 6 Seite 8 f.)

7

Tabelle 6

| ml 0,5 m H$_2$SO$_4$ | pH | · mmol (ausgetauschte) Na$^+$-Ionen/ 100 g geglühtes Produkt |
|---|---|---|
| 0,00 | 8,87 | 0,0 |
| 0,5 | 8,01 | 8,9 |
| 1,0 | 7,49 | 17,8 |
| 1,5 | 7,00 | 26,6 |
| 2,0 | 6,63 | 35,5 |
| 2,5 | 6,16 | 44,4 |
| 3,0 | 6,14 | 53,3 |
| 3,5 | 5,83 | 62,1 |
| 4,0 | 5,66 | 71,0 |
| 4,5 | 5,47 | 79,9 |
| 5,0 | 5,36 | 88,8 |
| 5,5 | 5,29 | 97,7 |
| 6,0 | 5,22 | 106,5 |
| 6,5 | 5,18 | 115,4 |
| 7,0 | 5,08 | 124,3 |
| 7,5 | 4,84 | 133,2 |
| 8,0 | 4,20 | 142,0 |
| 8,5 | 2,96 | 150,9 |
| 9,0 | 2,53 | 159,8 |
| 9,5 | 2,30 | 168,7 |

Beispiel 6

Zum Natriumsalz aus Beispiel 1 wird so viel Salzsäure bei Raumtemperatur allmählich zugegeben, bis ein pH-Wert von 2,0 erreicht ist. Die Reaktionsmischung wird ca. 15 Minuten gerührt, filtriert, der Filterrückstand erneut mit verdünnter Salzsäure bis zum Erreichen von pH 2,0 versetzt. Die entstandene kristalline Kieselsäure wird filtriert, zweimal mit Wasser gründlich gewaschen, erneut filtriert und trockengesaugt. Der Glühverlust des filterfeuchten Produktes beträgt 34,9 %. 100 g der feuchten Kieselsäure werden mit 190 g einer 5 %igen NaCl-Lösung versetzt und anschließend mit 1 m NaOH titriert. Tabelle 7 zeigt die Titrationswerte. Bei der graphischen Darstellung wird aus dem Wendepunkt der Kurve bei pH 9,5 ein Äquivalenzwert von 155 meq/100 g geglühtes Produkt ermittelt. Daraus wird ein Ionenaustauschvermögen von etwa 94 mmol H$^+$/mol SiO$_2$, entsprechend einem SiO$_2$ : Na$_2$O-Verhältnis von 21 : 1 bestimmt.

Tabelle 7

| ml 1 m NaOH | pH | mmol (ausgetauschte) Protonen/ 100 g geglühtes Produkt |
|---|---|---|
| 0,00 | 3,26 | 0,0 |
| 1,00 | 4,98 | 15,4 |
| 2,00 | 5,40 | 30,7 |
| 3,00 | 5,60 | 46,1 |
| 4,00 | 5,68 | 61,4 |

8

Tabelle 7 (Fortsetzung)

| ml 1 m NaOH | pH | mmol (ausgetauschte) Protonen/ 100 g geglühtes Produkt |
|---|---|---|
| 5,00 | 5,84 | 76,8 |
| 6,00 | 6,19 | 92,1 |
| 6,50 | 6,46 | 99,8 |
| 7,00 | 6,76 | 107,5 |
| 7,50 | 7,08 | 115,2 |
| 8,00 | 7,37 | 122,9 |
| 8,50 | 7,76 | 130,5 |
| 9,00 | 8,25 | 138,2 |
| 9,25 | 8,55 | 142,0 |
| 9,50 | 8,77 | 145,9 |
| 9,75 | 9,10 | 149,7 |
| 10,10 | 9,60 | 155,1 |
| 10,25 | 9,78 | 157,4 |
| 10,50 | 9,93 | 161,2 |
| 10,75 | 10,30 | 165,1 |
| 11,00 | 10,58 | 168,9 |
| 11,25 | 10,75 | 172,8 |
| 11,50 | 10,95 | 176,6 |
| 11,75 | 11,09 | 180,4 |
| 12,00 | 11,21 | 184,3 |
| 12,25 | 11,29 | 188,1 |
| 12,50 | 11,36 | 192,0 |
| 13,00 | 11,54 | 199,6 |
| 13,50 | 11,63 | 207,3 |
| 14,00 | 11,70 | 215,0 |
| 15,00 | 11,84 | 230,3 |
| 16,00 | 11,88 | 245,7 |

## Beispiel 7

Das Produkt wird mit gleicher Eduktzusammensetzung wie in Beispiel 1 hergestellt. Der Reaktionsmischung werden Impfkristalle eines Magadiit-artigen Silikats aus einem früheren Versuch zugesetzt. Die Reaktionsmischung wird 19 Stunden bei 165 °C gerührt, nach dem Erkalten filtriert, mit Wasser gewaschen und auf einer Nutsche trockengesaugt. 10 g der Mutterlauge der Reaktionsmischung, mit 250 ml Wasser verdünnt, haben einen pH-Wert von 10,4. Das Röntgenbeugungsdiagramm des an der Luft kurzzeitig getrockneten Produktes (Na-SKS-2) zeigt Tabelle 8. Das filterfeuchte Produkt, welches beim Glühen (> 1 000 °C) 61,3 % seines Gewichtes verliert, wird mit Schwefelsäure analog Beispiel 4 titriert. Tabelle 9 zeigt die Titrationswerte. Bei der graphischen Darstellung wird aus dem Wendepunkt der Kurve bei pH 5,0 ein Äqivalenzwert von 215 meq/100 g geglühtes Produkt ermittelt. Für ein Produkt der Zusammensetzung $Na_2O \cdot y\ SiO_2$ wird hieraus ein Ionenaustauschvermögen von 138 mmol $Na^-$/mol $SiO_2$, entsprechend einem $SiO_2 : Na_2O$-Verhältnis von 14,5 : 1 ermittelt. Arbeitet man ohne Impfkristalle, so werden deutlich längere Reaktionszeiten erforderlich.

Tabelle 8

| d ($10^{-8}$ cm) | I/Io |
|---|---|
| 15,5 | 100 |
| 7,76 | 13 |
| 5,15 | 20 |
| 4,69 | 8 |
| 4,44 | 10 |
| 4,23 | 7 |
| 3,63 | 18 |
| 3,54 | 24 |
| 3,44 | 79 |
| 3,30 | 49 |
| 3,14 | 65 |
| 2,81 | 11 |
| 2,58 | 8 |
| 2,34 | 6 |

Tabelle 9

| ml 0,5 m $H_2SO_4$ | pH | mmol (ausgetauschte) $Na^+$-Ionen/ 100 g geglühtes Produkt |
|---|---|---|
| 0,00 | 10,59 | 0,0 |
| 1,00 | 9,81 | 25,8 |
| 2,00 | 9,13 | 51,7 |
| 3,00 | 7,28 | 77,5 |
| 4,45 | 6,73 | 115,0 |
| 5,00 | 6,61 | 129,2 |
| 6,00 | 6,54 | 155,0 |
| 7,00 | 6,40 | 180,8 |
| 8,00 | 6,01 | 206,7 |
| 8,50 | 3,97 | 219,6 |
| 9,00 | 2,95 | 232,5 |
| 9,25 | 2,76 | 239,0 |
| 9,50 | 2,65 | 245,4 |
| 9,75 | 2,55 | 251,9 |
| 10,00 | 2,48 | 258,2 |
| 10,50 | 2,34 | 271,7 |
| 11,00 | 2,16 | 297,1 |
| 12,00 | 2,09 | 310,0 |
| 12,50 | 2,03 | 322,9 |
| 13,00 | 1,98 | 335,8 |

## Beispiel 8

100 g feuchtes Produkt aus Beispiel 7 werden zu 200 ml 5 %iger Salzsäure gegeben und 1,25 Stunden bei Raumtemperatur gerührt. Das Produkt wird filtriert, erneut zu einer gleichen Menge Salzsäure gegeben, 25 Stunden gerührt, filtriert und zweimal gründlich mit Wasser gewaschen, wobei das Produkt mit Wasser gerührt wird und bei der Filtration gewaschen wird. (Röntgenspektrum des an der Luft kurzzeitig getrockneten Produktes in Tabelle 10). Anschließend wird das Produkt trockengesaugt. Es weist einen Glühverlust von 57 % auf. Von dem trockengesaugten Produkt werden 10 g zu 190 ml 5 %iger NaCl-Lösung gegeben und anschließend mit 1 m NaOH titriert. Tabelle 11 zeigt die Titrationswerte. Bei der graphischen Darstellung wird aus dem Wendepunkt der Kurve bei pH 8,3 ein Äquivalenzwert von 235 mmol $H^+$/100 g geglühtes Produkt ermittelt. Daraus wird ein Ionenaustauschvermögen von etwa 144 meq/mol $SiO_2$, entsprechend einem $SiO_2$ : $Na_2O$-Verhältnis bzw. einem Verhältnis $SiO_2/2H^-$ von 13,9 : 1 bestimmt.

Bei natürlichem wie auch synthetischen Magadiit wird eine elementaranalytische Zusammensetzung von $SiO_2$ : $Na_2O$ von 13,4 bis 14,4 : 1 ermittelt (Lagaly et al., Am. Mineral., 60, 642-649 (1975)). Das durch Ionenaustauschvermögen von Na-SKS-2 (Beispiel 7) und H-SKS-2 (Beispiel 8) ermittelte Verhältnis von 14,5 : 1 bzw. 13,9 : 1 stimmt mit diesen Werten gut überein.

### Tabelle 10

| d ($10^{-8}$ cm) | I/Io |
|---|---|
| 12,1 | 11 |
| 7,42 | 5 |
| 5,55 | 6 |
| 4,35 | 8 |
| 3,69 | 17 |
| 3,62 | 18 |
| 3,43 | 100 |
| 3,25 | 16 |
| 3,21 | 16 |
| 3,18 | 15 |

### Tabelle 11

| ml 1 m NaOH | pH | mmol (ausgetauschte) Protonen/ 100 g geglühtes Produkt |
|---|---|---|
| 0,00 | 2,21 | 0,0 |
| 1,00 | 4,40 | 23,3 |
| 2,00 | 5,26 | 46,7 |
| 3,00 | 5,44 | 70,0 |
| 4,00 | 5,55 | 93,3 |
| 5,00 | 5,62 | 116,6 |
| 6,00 | 5,69 | 140,0 |
| 7,00 | 5,82 | 163,3 |
| 7,25 | 5,89 | 169,1 |
| 7,50 | 5,88 | 174,9 |
| 7,75 | 5,91 | 180,8 |
| 8,00 | 5,99 | 186,6 |
| 8,25 | 6,12 | 192,4 |

Tabelle 11 (Fortsetzung)

| ml 1 m NaOH | pH | mmol (ausgetauschte) Protonen/ 100 g geglühtes Produkt |
|---|---|---|
| 8,50 | 6,20 | 198,3 |
| 8,75 | 6,44 | 204,1 |
| 9,00 | 6,57 | 210,0 |
| 9,25 | 6,82 | 215,8 |
| 9,50 | 7,17 | 221,6 |
| 9,75 | 7,55 | 227,4 |
| 10,00 | 8,05 | 233,3 |
| 10,25 | 8,70 | 239,1 |
| 10,50 | 9,15 | 244,9 |
| 10,75 | 9,51 | 250,8 |
| 11,00 | 9,88 | 256,6 |
| 11,25 | 10,15 | 262,4 |
| 11,50 | 10,50 | 268,3 |

**Patentansprüche**

1. Verfahren zur Herstellung eines kristallinen Alkalischichtsilikates in wäßrigem Medium, dadurch gekennzeichnet, daß man ein in Wasser gelöstes oder ein amorphes Alkalisilikat mit einem molaren Verhältnis $M_2O/SiO_2$, wobei M für ein Alkalimetall steht, von 0,24 bis 2,0 mit so viel einer sauren Verbindung versetzt, daß ein molares Verhältnis $M_2O$ (nicht neutralisisiert)/$SiO_2$ von 0,05 bis 0,239 erreicht wird, man gegebenenfalls durch Verdünnen ein molares Verhältnis $SiO_2/H_2O$ von 1 : 5 bis 1 : 100 einstellt und man die Reaktionsmischung so lange bei einer Reaktionstemperatur von 70 bis 250 °C hält, bis das Alkalischichtsilikat auskristallisiert ist.

2. Verfahren nach Anspruch 1, dadurch gekennzeichnet, daß als in Wasser gelöstes Alkalisilikat Natronwasserglas eingesetzt wird.

3. Verfahren nach Anspruch 2, dadurch gekennzeichnet, daß das Natronwasserglas einen Gehalt von 22 bis 30 Gew.-% $SiO_2$ und 5 bis 9 Gew.-% $Na_2O$ aufweist.

4. Verfahren nach Anspruch 1, dadurch gekennzeichnet, daß die Reaktionstemperatur 130 bis 210 °C beträgt.

5. Verfahren nach Anspruch 1, dadurch gekennzeichnet, daß der Reaktionsmischung Impfkristalle des kristallinen Alkalischichtsilikates in einem Gewichtsverhältnis von 0,01 bis 30 % (bezogen auf den $SiO_2$-Anteil des in Wasser gelösten, beziehungsweise amorphen Alkalisilikats) zugesetzt werden.

**Claims**

1. A process for the preparation of a crystalline sheet-type alkali metal silicate in an aqueous medium, wherein an acidic compound is added to an amorphous alkali metal silicate, or an alkali metal silicate dissolved in water, having a molar ratio $M_2O/SiO_2$, where M represents an alkali metal, of 0.24 to 2.0, in an amount such that a molar ratio $M_2O$ (unneutralized)/$SiO_2$ of 0.05 to 0.239 is obtained, the molar ratio $SiO_2/H_2O$ is, if required, adjusted to 1 : 5 to 1 : 100 by dilution, and the reaction mixture is kept as a reaction temperature of 70 to 250 °C until the sheet-type alkali metal silicate has crystallized out.

2. The process as claimed in claim 1, wherein soda waterglass is employed as the alkali metal silicate dissolved in water.

3. The process as claimed in claim 2, wherein the soda waterglass contains 22 to 30 % by weight of $SiO_2$ and 5 to 9 % by weight of $Na_2O$.

4. The process as claimed in claim 1, wherein the reaction temperature is 130 to 210 °C.

5. The process as claimed in claim 1, wherein seed crystals of the crystalline sheet-type alkali metal silicate are added to the reaction mixture, in a weight ratio of 0.01 to 30 % (relative to the amount of $SiO_2$ in the amorphous alkali metal silicate, respectively the alkali metal silicate dissolved in water).

**Revendications**

1. Procédé de préparation d'un silicate alcalin cristallin à structure lamellaire en milieu aqueux, caractérisé en ce qu'on ajoute à un silicate alcalin, dissous dans l'eau ou amorphe, ayant un rapport molaire $M_2O/SiO_2$, où M est un métal alcalin, de 0,24 à 2,0, suffisamment d'un composé acide pour obtenir un rapport molaire $M_2O$ (non neutralisé)/$SiO_2$ de 0,05 à 0,239, qu'on ajuste éventuellement, par dilution, le rapport molaire $SiO_2/H_2O$ à une valeur comprise entre 1 : 5 et 1 : 100, et qu'on maintient le mélange réactionnel à une température de réaction de 70 à 250 °C jusqu'à ce que le silicate alcalin à structure lamellaire se soit séparé par cristallisation.

2. Procédé selon la revendication 1, caractérisé en ce qu'on utilise comme silicate alcalin dissous dans l'eau un verre soluble sodé.

3. Procédé selon la revendication 2, caractérisé en ce que le verre soluble sodé contient de 22 à 30 % en poids de $SiO_2$ et de 5 à 9 % en poids de $Na_2O$.

4. Procédé selon la revendication 1, caractérisé en ce que la température de réaction est de 130 à 210 °C.

5. Procédé selon la revendication 1, caractérisé en ce qu'on ajoute au mélange réactionnel des germes cristallins du silicate alcalin cristallin à structure lamellaire, selon un rapport en poids de 0,01 à 30 % (par rapport à la partie $SiO_2$ du silicate alcalin respectivement dissous dans l'eau et amorphe.